# EUROPEAN PATENT APPLICATION

(11) **EP 0 565 322 A1**
(43) Date of publication of application: **13.10.1993**
(21) Application number: 93302637.9
(22) Date of filing: 02.04.1993
(51) Int. Cl.: H01M 2/10

(54) **Battery pack**

(30) Priority: 04.04.1992 GB 9207440
(71) Applicant: DSM VIDEO LIMITED, Haydock, Merseyside WA11 0SX (GB)
(72) Inventor: Martland, David Stuart, Haydock, Merseyside WA11 0SX (GB)
(74) Representative: Linn, Samuel Jonathan

(57) **Abstract**

A battery pack (20) is provided which is mountable on a hand strap or grip (12) of an item of portable electronic equipment, such as a video camera recorder (10). This provides an increase of power. The battery pack is ergonomically designed to fit the hand of the user, and in use it helps to counterbalance the weight of the video camera.

Additionally a number of accessory connections (30) may be provided on the battery pack (20) for connection to eg. a light or a microphone. Also provision may be provided for an additional cell to increase the normal voltage of the battery pack above that required by the equipment.

## Description

This invention relates to a battery pack, and in particular to a battery pack for hand held portable electronic and electrical equipment, for example video camera recorders or cellular phones.

The increasing trend to miniaturisation of video camera recorders and cellular telephones has caused difficulty in powering such equipment. Battery technology miniaturisation thereof has not kept pace with these changes. Whilst batteries can be made smaller, the power output of such batteries is proportionally smaller and hence the batteries only function for a shorter period of time at the required power output.

Hand held portable electronic and electrical equipment powered from batteries usually have a short operating time before the batteries either require changing or in the case of rechargable battery packs being recharged.

As the miniaturisation of such electrical items would be compromised if additional battery packs had to be provided, the limitations of existing battery packs have been accepted up to the present time.

A further problem with the miniaturisation of video camera recorders is the need to remove or eliminate accessory connection ports, for example, connections for lights, external microphones, etc, which can be used in conjunction with the main equipment.

It is an object of the invention to provide a battery pack which alleviates some of the above problems.

Accordingly, in a first aspect, the present invention provides a battery pack for portable electronic or electrical equipment including a housing for containing one or more batteries for powering the equipment, means for attachment of the housing to holding means such as a strap or a handle of the equipment, and electrical connection of the battery pack means for connection to the equipment.

This allows the addition of further battery power to be provided for to the equipment that may be par- alleled with an existing battery pack of the equipment effectively increasing the continuous operating time of the equipment.

Preferably the housing is shaped in a curved or arcuate manner and /or is ergonomicaly desgined to fit the users hand.

In most cases this will substantially counter balance the equipment, especially when used with video cameras and hand portable cellular telephones.

In a preferred embodiment, the invention also includes one or more connection means such as accessory attachment fittings. This allows an electrically powered accessory, such as a video light, miniture TV monitor or external microphone, to be attached to the battery pack and obtain its power therefrom. This is particularly useful for equipment that is not equipped with an accessory attachment facility. Also when used with a microphone there is an advantage in not having any solid connection with the equipment since this reduces noise picked up by the microphone, eg. by handling the camera.

By providing the battery pack in a curved or similar ergonomicaly shaped housing, the pack is conveniently held by the normally curved hand grip strap provided on such equipment. Furthermore, the positioning of the battery pack to the opposite side of the users hand to that of the equipment may provide a convenient counter balance for spreading the weight of the total unit.

With new types of high density rechargable batteries, eg. nickel metal hydride and lithium ion, being available, the basic shape and size of electronic hand held equipment has still required that all or most of weight of the equipment is out of balance. This is most evident on hand held video palmcorders and camcorders. Most equipment manufacturers reduce the size of the supplied battery, as extra bulk attached to the equipment un-balances the equipment even further. A battery pack according to the present invention may be twice as powerful as a standard supplied battery, but because it is attached to the handstrap it may counter balance the equipment and almost all the extra weight may be removed by "counter balance".

The invention is especially designed for use with video camera recorders or cellular telephones, but can also be used for any radio or telecommunication equipment, small computers etc.

The means for attachment of the housing to the hand grip, handle or strap of the equipment, can be any convenient arrangement, for example, the use of a hooked/looped pile fastener such as velcro (trade mark), or some form of frictionally engaging clip, for example, a "U" shaped plastic clip.

In the preferred embodiment, the housing is provided with at least one cloth strap provided with a velcro (trade mark) or similar hooked/looped pile fastener at each end. In this way, the strap can be fastened around the normal hand strap on the equipment, thereby securely fastening the housing thereto. Such an arrangement will allow the housing to be conveniently positioned on any size of hand strap. More straps could be provided if additional stability is required.

Advantageously, the additional battery pack is connected in parallel with the existing battery pack thereby effectively doubling the continuous operational time. The operational time may in fact be more than doubled due to a reduction in load on each battery. The invention may also be provided with means for linking a further parallel connection to the equipments own battery pack or to a further mounted battery. This provides the equipment's user with an option of powering one or more accessories or other equipment independently or from several battery packs according to the present invention all connected in parallel.

Preferably, the batteries contained in the housing are re-chargeable and the housing is provided with a charger input to permit re-charging of the battery pack. The charger input may also function as a second output connector for accessories etc.

A battery pack according to the present invention may be used with a dummy battery or replacement unit or other means of connecton to the equipment's power input to allow it to power a video camera recorder or cell phone on its own. The dummy battery pack orother means may be used to charge the battery from the equipment's own charger.

In a further aspect of the invention, the battery pack is provided with an extra battery cell which may increase the normal voltage of the battery pack and increase the run time of the equipment being powered. It is known that where equipment is powered by rechargeable batteries, a battery cut-off device often switches off the equipment before the battery is fully discharged to the manufacturers recommended voltage. The provision of an extra cell in either the original battery, a replacement battery or an additional battery pack provides increased use time by prolonging the voltage before the cut off point is reached. Preferably the normal voltage of the battery pack is at least 0.5V greater than that required by the equipment, and advantageously 1-2V greater.

This aspect of the invention is preferably applied to portable video camera recorders and is most useful when the battery pack or the equipment's own original battery pack are used independently.

An embodiment of the invention will be described further by way of example with reference to the accompanying drawing in which:-
Fig. 1 is a perspective front view of a preferred aspect of the invention as attached to a video camera recorder; and
Fig. 2 is a perspective rear view of a preferred aspect of the invention disconnected from a video camera recorder.

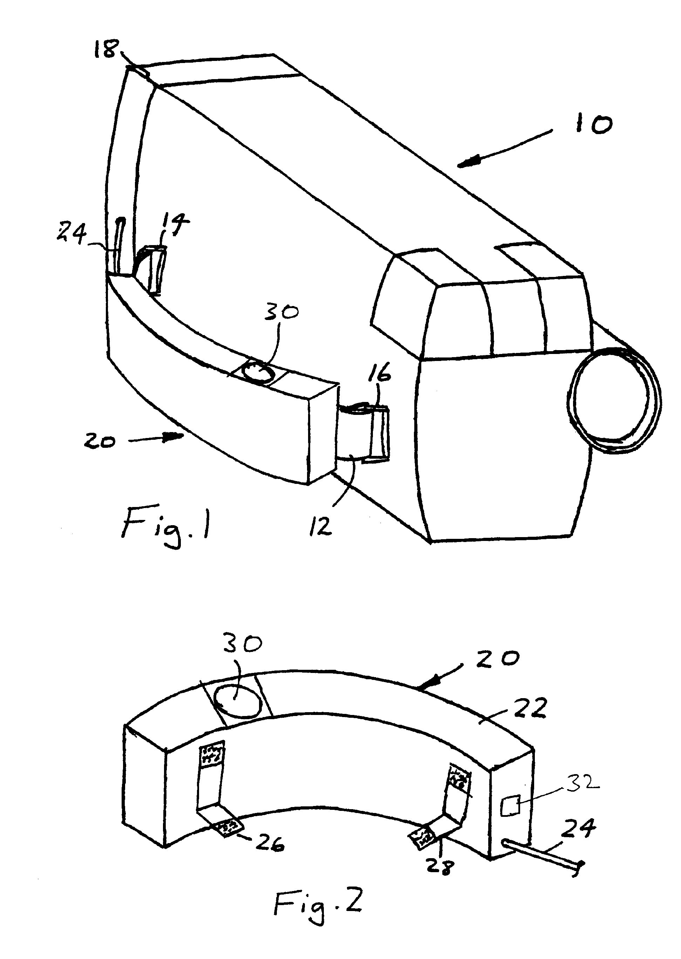

Referring firstly to Fig. 1, a video camera recorder of more or less conventional design is indicated generally by the reference numeral 10. The video camera recorder is illustrated schematically as the precise details of its configuration are not material to the invention. The video camera recorder includes a flexible hand strap 12 attached in an arcuate or curved man- nerto the video camera recorder 10 by buckles 14,16 arranged at each end of the strap 12. These buckles 14, 16 are attached to the video camera recorder body.

The video camera recorder 10 is typically provided with a battery 18 which is normally arranged as a block like housing and connected to one rear end of the video camera recorder 10. Such connection electrically connects the battery 18 to the video camera recorder for powering thereof. As has been discussed previously, the discharge time of the battery can be relatively short, particularly where stop/start operation of the video camera recorder is required.

In order to provide extra battery power without significantly increasing the bulk of the video camera recorder, a battery pack according to an aspect of the present invention is provided as shown in Fig. 2. The battery pack is referred to generally by the reference numeral 20 and includes a curved housing or casing 22 containing one or more batteries or battery cells (not shown) - preferably rechargable batteries. The battery pack 20 is provided with an electrical connection, for example a wire terminating in a plug (not shown), for connection with the existing video camera recorder battery pack 18. The battery pack 20 is further provided with at least two cloth or similar flexible material straps 26, 28.

These straps 26, 28 are secured to the battery pack substantially at their mid-points such that their respective ends are free from hinderance. These ends are provided with a hooked/looped pile fastener, for example as sold under the trade name Velcro. In this way the two straps 26, 28 can be secured around a substantially linear object eg. the strap 12 passed near their mid point.

Securement of the battery pack is therefore effected substantially as shown in Fig. 1, with the battery pack 20 being positioned adjacent to the hand strap 12. The two flexible straps 26, 28 are fastened around the hand strap thereby holding the battery pack firmly in place. Electrical connection is made by plugging the wire 24 into the battery 18. The battery pack is therefore effectively connected in parallel with the equipment battery, thereby increasing and preferably doubling or "over" doubling the operational life span of the two battery packs.

Alternatively a replacement battery pack (possibly a dummy pack) may be used in place of the battery 18. Connection is then made from the replacement battery to the battery pack 20.

A further advantage of the invention is that one or more accessory attachment fittings 30, 32 may be provided on the additional battery pack 20. These fittings may take an external accessory, for example a light and external microphone, a small TV monitor as required. Power for this accessory is drawn simultaneously and in parallel from both the additional battery pack 20 and the system's original battery pack 18.

The invention is not confined to the forgoing details and variations made thereto within the scope of the invention. For example only one fastening strap need be provided if sufficient stability can be imparted. Additionally, the battery pack can be used with any model of video camera recorder or cellular phone including those having an integral battery pack as part of their hand grip. The additional battery cell can be fitted to any battery pack including original battery packs fitted to portable electrical equipment.

## Claims

1. A battery pack (20) for portable electronic or electrical equipment (10) including a housing for containing one or more batteries for powering the equipment, means (26, 28) for attachment of the housing to holding means (12) of the equipment, and electrical connection means (24) for connection of the battery pack to the equipment.

2. A battery pack according to claim 1 in which the housing has a generally arcuate configeration so as to fit the user's hand.

3. A battery pack according to claim 1 or claim 2 adapted to substantially counter-balance the weight of the equipment when in use.

4. A battery pack according to any of the above claims, including one or more accessory connection means (30) for electrical connection to one or more electrical or electronic accessories.

5. A battery pack according to any of the above claims in which the electrical connection means provide a parallel connection to a battery included in the equipment.

6. A battery pack according to claim 5 including means for providing a further parallel connection to a further such battery pack or to a battery included in the equipment.

7. A battery pack according to any of the above claims in which the batteries are re-chargable, further including a charger input to permit re-charging of the batteries in the battery pack.

8. A battery pack according to the above claims in which the normal voltage of the battery pack in use is greater than that required by the equipment.

9. A battery pack according to claim 8 in which the housing is for further including at least one extra battery in addition to the said one or more batteries required to power the equipment, to provide an increase in the normal voltage of the battery pack.

10. A battery pack according to any one of the above claims in which the electrical connection means include means substitutable for a battery included in the equipment.
